# EUROPÄISCHE PATENTANMELDUNG

(11) **EP 1 484 151 A2**
(43) Veröffentlichungstag der Anmeldung: **08.12.2004**
(21) Anmeldenummer: 04011802.8
(22) Anmeldetag: 18.05.2004
(51) Int. Cl.: B29C 44/58, B29C 44/34, B29C 44/12

(54) **Schäumwerkzeug und damit hergestelltes Zwischenerzeugnis**

(30) Priorität: 05.06.2003 DE 10325619
(71) Anmelder: ArvinMeritor GmbH, 63128 Dietzenbach (DE)
(72) Erfinder: Ludwig, Matthias, 38159 Vechelde (DE); Lutz, Marcus, 38518 Gifhorn (DE); Niebuhr, Frank, 38518 Wilsche (DE); Batke, Harald, 38539 Gerstenbüttel (DE)
(74) Vertreter: Sties, Jochen, Dipl.-Ing.

(57) **Zusammenfassung**

Ein Schäumwerkzeug (10) mit einem ersten Formteil (12) und einem zweiten Formteil (14), wobei in dem Schäumwerkzeug mindestens zwei Kavitäten (16, 18) gebildet sind, um ausgehend von einem Substrat (22) zwei Bauteile herzustellen, ist dadurch gekennzeichnet, daß zwischen den beiden Kavitäten (16, 18) ein Ausgleichsbereich (20) vorgesehen ist, der einen Entlastungsbereich (28) aufnehmen kann, der an dem Substrat (22) ausgebildet ist. Ein Substrat (22) mit einem ersten Bauteilabschnitt (24) und einen zweiten Bauteilabschnitt (26), die dafür vorgesehen sind, in Kavitäten (16, 18) eines Schäumwerkzeugs (10) angeordnet zu werden, um mit einem schäumbaren Kunststoff hinterschäumt zu werden, ist dadurch gekennzeichnet, daß zwischen den beiden Bauteilabschnitten (24, 26) ein Entlastungsbereich (28) ausgebildet ist.

## Beschreibung

Die Erfindung betrifft ein Schäumwerkzeug mit einem ersten Formteil und einem zweiten Formteil, wobei in dem Schäumwerkzeug mindestens zwei Kavitäten gebildet sind, um ausgehend von einem Substrat mindestens zwei Bauteile herzustellen. Die Erfindung betrifft außerdem ein Substrat mit einem ersten Bauteilabschnitt und einem zweiten Bauteilabschnitt, die dafür vorgesehen sind, in Kavitäten eines Schäumwerkzeugs angeordnet zu werden, um mit einem schäumbaren Kunststoff hinterschäumt zu werden. Auf diese Weise können insbesondere Karosserie- oder Anbauteile für Kraftfahrzeuge hergestellt werden.

Als Substrat wird insbesondere eine thermoplastisch verformte Kunststoffolie verwendet, die auf eines der Formteile des Schäumwerkzeugs aufgelegt wird. Auf das Substrat wird dann beispielsweise Polyurethan aufgebracht, und das Schäumwerkzeug wird mit dem zweiten Formteil geschlossen. Wenn das Polyurethan expandiert und reagiert, wird Wärme freigesetzt, was zu einer Wärmedehnung führt. Dadurch entstehen Spannungen im Substrat, was zur Bildung von Abzeichnungen wie Streifen auf der später außenliegenden, sichtbaren Seite des Substrates führen kann, was unerwünscht ist. Das Problem der Spannungsbildung ist besonders gravierend, wenn in einem Schäumwerkzeug und einem zusammenhängenden Substrat in einem Arbeitsgang mehrere Bauteile gleichzeitig hergestellt werden sollen.

Die Aufgabe der Erfindung besteht darin, ein Schäumwerkzeug und ein Substrat der eingangs genannten Art zu schaffen, bei denen sich kein Qualitätsverlust insbesondere der Außen- oder Sichtseite beim Schäumen ergibt.

Zu diesem Zweck ist erfindungsgemäß bei einem Schäumwerkzeug der eingangs genannten Art zwischen den beiden Kavitäten ein Ausgleichsbereich vorgesehen, der einen Entlastungsbereich aufnehmen kann, der an dem Substrat ausgebildet ist. Das erfindungsgemäße Schäumwerkzeug beruht auf den Grundgedanken, zwischen den beiden Kavitäten einen Bereich bereitzustellen, in den hinein das Substrat beim Schäumen eine geringfügige Ausweichbewegung machen kann, wodurch der Aufbau von Spannungen im Substrat verringert wird. Dieser Ausgleichsbereich liegt zweckmäßigerweise zwischen den Bereichen, in denen der Wärmeeintrag erfolgt, also zwischen den beiden Kavitäten.

Zur Lösung der oben genannten Aufgabe ist erfindungsgemäß bei einem Substrat der eingangs genannten Art vorgesehen, daß zwischen den beiden Bauteilabschnitten ein Entlastungsbereich ausgebildet ist. Der Entlastungsbereich zeichnet sich dadurch aus, daß er, in der Ebene des Substrates betrachtet, eine verringerte Festigkeit oder einen verringerten Widerstand gegen Längendehnung aufweist, wodurch es möglich ist, daß sich das Substrat aus den beiden Bauteilabschnitten in den Entlastungsbereich hinein ausdehnt. Ein weiterer Vorteil der Erfindung besteht in einem sehr einfachen produktseitigen Toleranzausgleich mehrerer nacheinander einzusetzender Werkzeuge wie Umformwerkzeug, Schäumwerkzeug und Endbearbeitungswerkzeug.

Der Entlastungsbereich kann entweder durch eine Entlastungsrinne gebildet sein, die aufgrund ihrer gekrümmten Form vergleichsweise leicht verformbar ist. Ein besonderer Vorteil der Entlastungsrinne besteht darin, daß sie einen besonders hohen Biegewiderstand bei Belastungen um eine Achse quer zu ihrer Erstreckungsrichtung aufweist. Dies ermöglicht eine zuverlässige Handhabung des Substrats bei den verschiedenen Arbeitsschritten zur Herstellung der hinterschäumten Bauteile.

Ein Entlastungsbereich mit besonders niedriger Festigkeit kann dadurch erreicht werden, daß ein spaltförmiger Ausschnitt zwischen den beiden Bauteilabschnitten gebildet wird, beispielsweise durch Ausstanzen mindestens eines Materialstreifens. Auch dies ermöglicht, daß das Material des Substrates beim Schäumvorgang in den Entlastungsbereich hinein ausweichen kann, wodurch Spannungen im Substrat vermieden werden. Wenn der Entlastungsbereich durch einen einfachen Ausschnitt gebildet ist, sind am Schäumwerkzeug keine besonderen Vorkehrungen notwendig, um den Entlastungsbereich zu bilden.

Vorteilhafte Ausgestaltungen der Erfindung ergeben sich aus den Unteransprüchen.

Die Erfindung wird nachfolgend anhand zweier Ausführungsformen beschrieben, die in den beigefügten Zeichnungen dargestellt sind. In diesen zeigen:
- Figur 1 in einer schematischen Schnittansicht ein erfindungsgemäßes Schäumwerkzeug mit darin angeordnetem erfindungsgemäßen Substrat;
- Figur 2 eine Draufsicht auf das Substrat von Figur 1;
- Figur 3 in vergrößertem Maßstab den Ausschnitt III von Figur 1, wobei das Substrat vor dem Schäumvorgang gezeigt ist;
- Figur 4 in einer Ansicht entsprechend derjenigen von Figur 3 das Substrat nach einem Schäumvorgang;
- Figur 5 einen weiteren Bearbeitungsschritt des Substrates nach dem Schäumvorgang;
- Figur 6 in einer perspektivischen Ansicht ein Formteil eines erfindungsgemäßen Schäumwerkzeugs; und
- Figur 7 in einer schematischen Draufsicht ein Substrat gemäß einer alternativen Ausführungsform.

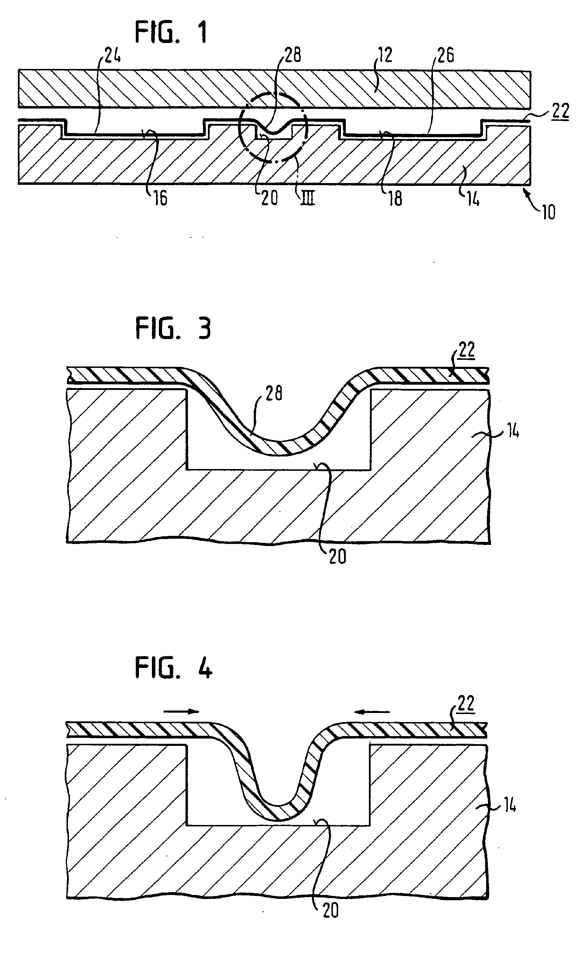

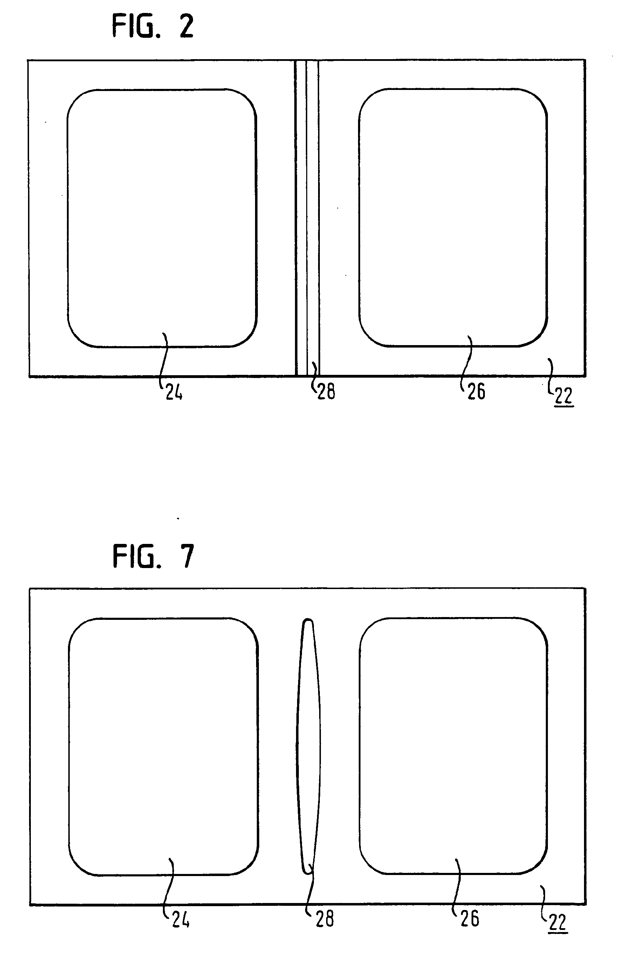

In Figur 1 ist schematisch ein Schäumwerkzeug 10 gezeigt, die aus einem Oberteil 12 und einem Unterteil 14 besteht. Im Unterteil 14 des Schäumwerkzeugs 10 sind zwei Kavitäten 16, 18 gebildet. Zwischen den beiden Kavitäten 16, 18 ist ein Ausgleichsbereich 20 gebildet, der hier als Nut mit rechteckigem Querschnitt im Unterteil 14 des Schäumwerkzeugs ausgeführt ist. Die Nut kann alternativ auch im Oberteil des Schäumwerkzeugs vorgesehen sein.

Auf das Unterteil 14 des Schäumwerkzeugs 10 ist ein Substrat 22 (siehe auch Figur 2) aufgelegt, das aus einer tiefgezogenen Folie aus einem thermoplastischen Kunststoff besteht. Alternativ kann auch eine Folie aus Aluminium oder einer Aluminiumlegierung verwendet werden. Das Substrat 22 weist einen der Kavität 16 zugeordneten Bauteilabschnitt 24 und einen der Kavität 18 zugeordneten Bauteilabschnitt 26 auf. Zwischen den beiden Bauteilabschnitten 24, 26 ist ein Entlastungsbereich 28 gebildet, der hier als abgerundete Entlastungsrinne (siehe Figur 3) ausgeführt ist. Der Entlastungsbereich 28 des Substrates 22 kommt im Ausgleichsbereich 20 des Unterteils 14 des Schäumwerkzeugs 10 zu liegen.

Um Kompositbauteile herzustellen, wird auf die Bauteilabschnitte 24, 26 des Substrates 22 jeweils eine vorbestimmte Menge von schäumbarem Kunststoff 30 aufgebracht, beispielsweise Polyurethan. Nach Schließen des Schäumwerkzeugs reagiert das Polyurethan und härtet aus, wobei Wärme freigesetzt wird. Die sich dabei ergebende Wärmedehnung führt dazu, daß die Bauteilabschnitte 24, 26 des Substrates 24 geringfügig in den Kavitäten 16, 18 wandern. Der sich dadurch ergebende "Materialüberschuß" wird dadurch aufgenommen, daß die Entlastungsrinne zusammengeschoben wird (siehe Figur 4). Hierzu sind aufgrund der Geometrie der Entlastungsrinne nur geringe Kräfte notwendig, so daß sich keine schädlichen Spannungen im Substrat aufbauen können.

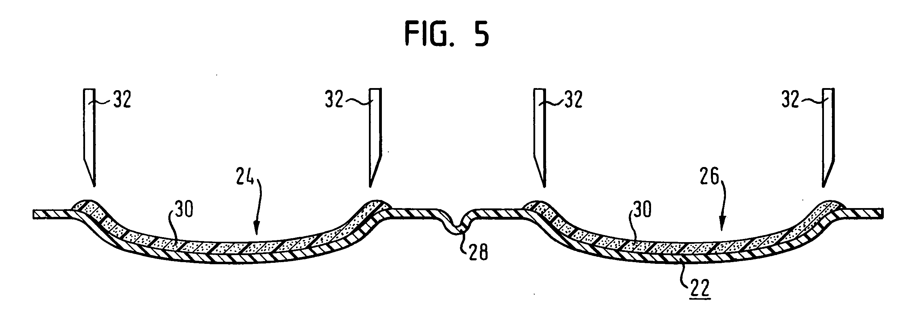

In Figur 5 ist das Substrat 22 mit dem geschäumten Kunststoff 30 in den Bauteilabschnitten 24, 26 in dem Zustand zu sehen, wie es dem Schäumwerkzeug entnommen wird. Zwischen den Bauteilabschnitten 24, 26 ist der Entlastungsbereich 28 zu sehen. Als nächster Schritt werden die Randbereiche des Substrates einschließlich des sich darauf befindenden, geschäumten Kunststoffs 30 abgetrennt, hier angedeutet durch Messer 32, so daß die fertigen Bauteile erhalten werden. Dabei wird auch der Entlastungsbereich 28 abgetrennt.

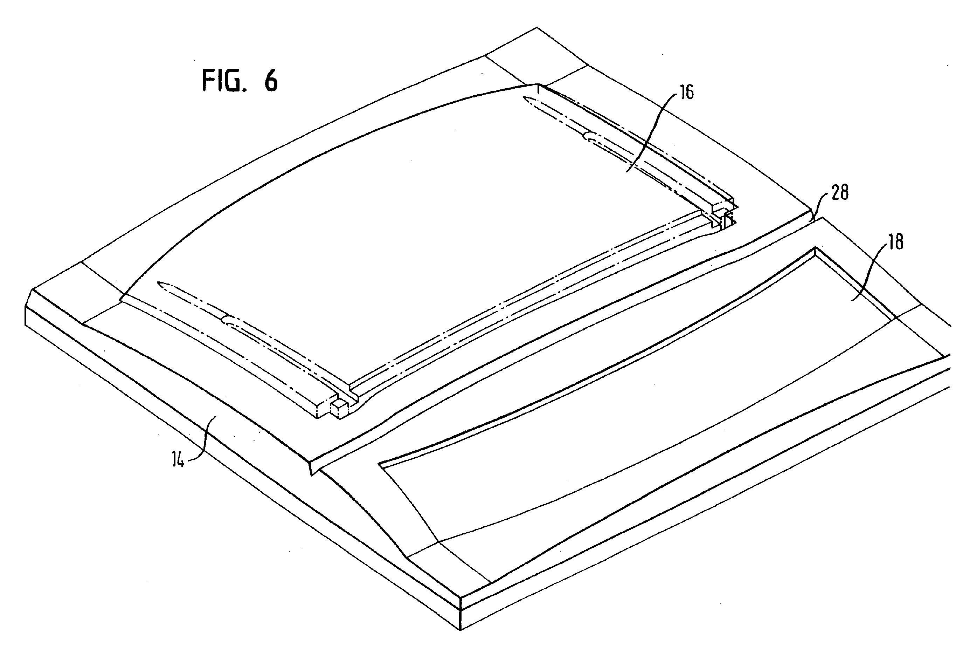

In Figur 6 ist in einer perspektivischen Ansicht das Unterteil 14 eines Schäumwerkzeugs 10 gezeigt. Als Entlastungsbereich 28 ist hier eine Nut vorgesehen, die einen V-förmigen Querschnitt hat und sich über die gesamte Breite des Unterteils 14 erstreckt. Alternativ ist auch ein U-förmiger Querschnitt möglich. Weiterhin ist alternativ möglich, daß die Nut im Oberteil des Schäumwerkzeugs 10 vorgesehen ist.

In Figur 7 ist ein Substrat gemäß einer alternativen Ausführungsform gezeigt. Der Entlastungsbereich 28 ist hier durch einen spaltförmigen Ausschnitt gebildet, der durch Stanzen erhalten ist. Der Vorteil dieser Ausführungsform gegenüber der ersten Ausführungsform besteht darin, daß am Schäumwerkzeug keine besonderen Vorkehrungen getroffen werden müssen, um einen Ausgleichsbereich zu schaffen; das Substrat kann einfach aufgrund des gebildeten Spaltes wandern. Der Nachteil dieser Ausführungsform besteht darin, daß die Festigkeit des Substrates verringert ist, so daß die Handhabung, insbesondere beim Einlegen in das Schäumwerkzeug und das Herausnehmen aus dem Schäumwerkzeug, aufwendiger ist.

### Bezugszeichenliste:

- 10:: Schäumwerkzeug
- 12:: Oberteil
- 14:: Unterteil
- 16:: Kavität
- 18:: Kavität
- 20:: Ausgleichsbereich
- 22:: Substrat
- 24:: Bauteilabschnitt
- 26:: Bauteilabschnitt
- 28:: Entlastungsbereich
- 30:: geschäumter Kunststoff
- 32:: Messer

## Patentansprüche

1. Schäumwerkzeug (10) mit einem ersten Formteil (12) und einem zweiten Formteil (14), wobei in dem Schäumwerkzeug mindestens zwei Kavitäten (16, 18) gebildet sind, um ausgehend von einem Substrat (22) mindestens zwei Bauteile herzustellen, **dadurch gekennzeichnet, daß** zwischen den beiden Kavitäten (16, 18) ein Ausgleichsbereich (20) vorgesehen ist, der einen Entlastungsbereich (28) aufnehmen kann, der an dem Substrat (22) ausgebildet ist.

2. Schäumwerkzeug nach Anspruch 1, **dadurch gekennzeichnet, daß** der Ausgleichsbereich (20) einen Schiebeweg für das Substrat (22) bereitstellt.

3. Schäumwerkzeug nach Anspruch 1 oder Anspruch 2, **dadurch gekennzeichnet, daß** der Ausgleichsbereich (20) eine Nut ist.

4. Schäumwerkzeug nach Anspruch 3, **dadurch gekennzeichnet, daß** die Ausgleichsnut sich über die gesamte Breite der Schäumform erstreckt.

5. Schäumwerkzeug nach Anspruch 3 oder Anspruch 4, **dadurch gekennzeichnet, daß** die Ausgleichsnut einen U-förmigen oder V-förmigen Querschnitt hat.

6. Schäumwerkzeug nach Anspruch 3 oder Anspruch 4, **dadurch gekennzeichnet, daß** die Ausgleichsnut einen rechteckigen Querschnitt hat.

7. Substrat (22), insbesondere Verbundbauteil-Außenhaut, mit einem ersten Bauteilabschnitt (24) und einen zweiten Bauteilabschnitt (26), die dafür vorgesehen sind, in Kavitäten (16, 18) eines Schäumwerkzeugs (10) angeordnet zu werden, um mit einem schäumbaren Kunststoff hinterschäumt zu werden, **dadurch gekennzeichnet, daß** zwischen den beiden Bauteilabschnitten (24, 26) ein Entlastungsbereich (28) ausgebildet ist.

8. Substrat nach Anspruch 7, **dadurch gekennzeichnet, daß** der Entlastungsbereich (28) durch einen spaltförmigen Ausschnitt gebildet ist.

9. Substrat nach Anspruch 7, **dadurch gekennzeichnet, daß** der Entlastungsbereich (28) durch eine Entlastungsrinne gebildet ist.

10. Substrat nach einem der Ansprüche 7 bis 9, **dadurch gekennzeichnet, daß** ein darauf aufgebrachter, geschäumter Kunststoff (30) sich bis kurz vor den Entlastungsbereich (28) erstreckt, so daß ein Verbundbauteil gebildet ist, insbesondere ein Dachmodul.

11. Verfahren zum Herstellen eines Verbundbauteils mittels der folgenden Schritte:
- das wird ein Substrat bereitgestellt, das mindestens zwei Bauteilabschnitte und Entlastungsbereich zwischen den Bauteilabschnitten aufweist;
- die Bauteilabschnitte werden hinterschäumt;
- der Entlastungsabschnitt wird abgetrennt.
